# FASCICULE DE BREVET EUROPEEN

(11) **EP 2 665 399 B1**
(45) Date de publication et mention de la délivrance du brevet: **18.11.2015**
(21) Numéro de dépôt: 12705342.9
(22) Date de dépôt: 19.01.2012
(51) Int. Cl.: A47J 45/07

(54) **DISPOSITIF AMOVIBLE DE PRÉHENSION D'UN USTENSILE DE CUISSON**
ABNEHMBARE VORRICHTUNG ZUM GREIFEN EINES KOCHGESCHIRRS
REMOVABLE DEVICE FOR GRIPPING A COOKING UTENSIL

(30) Priorité: 20.01.2011 FR 1150448
(43) Date de publication de la demande: 27.11.2013
(73) Titulaire: CRISTEL, 25490 Fesches le Chatel (FR)
(72) Inventeur: DODANE, Paul, F-25490 Fesches Le Chatel (FR); DROUVILLE, Pascal, F-90400 Danjoutin (FR)
(74) Mandataire: Merckling, Norbert
(86) Numéro de dépôt international: PCT/FR2012/050114
(87) Numéro de publication internationale: WO 2012/098334

(56) Documents cités:
- WO-A1-02/19882
- DE-U1-202006 014 535
- DE-U1-202010 000 093
- FR-A3- 2 789 874
- US-B1- 6 260 733
- US-B1- 6 694 868

## Description

### Domaine technique et état de l'art

L'invention concerne un dispositif de préhension amovible pour manipuler des ustensiles de cuisson ayant au moins une oreille de préhension dans laquelle est ménagée une lumière sensiblement parallèle au bord interne de la dite oreille, le dispositif comportant une coque comprenant une cavité interne qui débouche latéralement sur une face avant du dispositif par un orifice oblong, la dite cavité étant susceptible de loger l'oreille lorsque l'oreille est introduite par l'orifice oblong, le dispositif comprenant également un dispositif de verrouillage logé à l'intérieur d'une chambre de débattement ménagée dans la coque et susceptible de coopérer avec la lumière de l'oreille lorsque la dite oreille loge dans la cavité.

De tels dispositifs, également appelés anses, sont généralement utilisés par paires, ou avec une poignée en vis à vis, pour saisir, soulever manipuler et verser des ustensiles de cuisson creux, tels que des casseroles ou des poêles, ayant deux oreilles diamétralement opposées et recourbées vers l'extérieur. De tels dispositifs permettent de manipuler les ustensiles de cuisson, même chauds, sans danger, sans risque de brûlure notamment.

Un tel dispositif de préhension est notamment connu de la demande de brevet FR 2 813 516. Un dispositif de verrouillage est prévu pour empêcher un désaccouplement non souhaité de l'oreille et du dispositif de préhension et ainsi éviter tout risque de brûlure. Le dispositif de verrouillage est positionné dans une chambre de débattement à l'intérieur d'une coque réalisée par deux demi-coques assemblées par des vis. Le dispositif de verrouillage comprend une plaque montée pivotante autour d'un axe dont les extrémités forment des paliers de pivotement et sont maintenues en position dans des gorges cylindriques formées par les deux demi-coques assemblées de part et d'autre de la chambre de débattement.

Mais un tel dispositif est complexe à réaliser. En effet, le dispositif comprend un nombre important de pièces, et un outil tel qu'un tournevis est nécessaire pour l'assemblage des différentes pièces de la coque après la mise en place du dispositif de verrouillage. La réalisation d'un tel dispositif à l'échelle industrielle est donc onéreuse.

Le document US-B1-6 694 868 divulgue un autre exemple de dispositif de préhension ayant une coque monobloc.

### Description de l'invention

L'invention propose un nouveau dispositif de préhension comprenant un nombre d'éléments particulièrement réduit, et dont le montage est facilité.

Plus précisément, l'invention propose un dispositif de préhension (encore appelé anse) amovible pour manipuler des ustensiles de cuisson ayant les caractéristiques de la revendication 1. Les risques d'un décrochage non souhaité du dispositif de préhension de l'ustensile de cuisson sont ainsi réduits. Egalement, la coque du dispositif de préhension selon l'invention est monobloc. Ainsi, aucune vis, aucun outil n'est nécessaire pour assembler les éléments formant la coque. L'assemblage des pièces du dispositif de préhension est ainsi grandement facilité et le temps de fabrication particulièrement limité.

Selon l'invention, le moyen de verrouillage comprend une plaque montée pivotante à l'intérieur de la chambre de débattement entre une position de verrouillage et une position déverrouillée, la dite plaque comprenant à une extrémité avant un bec adapté pour loger dans la lumière de l'oreille en position verrouillée du moyen de verrouillage et lorsque l'oreille loge dans la cavité interne, la dite plaque comprenant également un axe de pivotement positionné sur une face de dessous de la plaque le dit axe de pivotement s'étendant sensiblement parallèle à l'orifice oblong, une longueur de l'axe de pivotement étant inférieure ou égale à une largeur de la plaque. L'axe de pivotement ne dépassant pas de part et d'autre de la plaque, le moyen de verrouillage peut être positionné sans difficulté à l'intérieur de la coque monobloc comme on le verra mieux par la suite. De plus, quand l'axe de pivotement de la plaque est positionné à proximité de l'extrémité arrière de la plaque, la longueur de la plaque est limitée, et la largeur de la coque est limitée en conséquence.

Le moyen de verrouillage comprend également un moyen de rappel élastique tendant à amener ou à maintenir la plaque en position de verrouillage. Le moyen de rappel élastique est par exemple un ressort positionné entre une face de dessus de la plaque et une paroi supérieure de la coque. Alternativement, le ressort peut être positionné entre une face de dessous de la plaque et une paroi inférieure de la coque si le ressort travaille en extension au lieu de travailler en compression.

Dans ce mode de réalisation, le nombre de pièces nécessaires à la réalisation d'une anse selon l'invention est limité à trois : une coque monobloc, une plaque pivotante et un moyen de rappel tel qu'un ressort. Ce nombre est particulièrement faible et a pour conséquence des avantages techniques et économiques évidents : facilité de montage, temps de montage réduit, temps de fabrication des pièces de l'anse réduit au minimum, etc.

### Brève description des figures

L'invention sera mieux comprise, et d'autres caractéristiques et avantages de l'invention apparaîtront à la lumière de la description qui suit d'exemples de réalisation d'un dispositif amovible de préhension, selon l'invention. Ces exemples sont donnés à titre non limitatif. La description est à lire en relation avec les dessins annexés dans lesquels
- la figure 1 est une coupe longitudinale selon un plan de symétrie verticale d'un dispositif amovible selon l'invention en position verrouillée sur une oreille d'un ustensile de cuisson,
- la figure 2 est une vue externe du dispositif de la figure 1,
- la figure 3 est une vue éclatée du dispositif de la figure 1, une coque du dispositif ayant été découpée pour montrer sa réalisation intérieure,
- les figures 4 à 6 sont respectivement une vue extérieure, une coupe longitudinale et une vue de dessus de la plaque du dispositif de la figure 1.

### Description d'un mode de réalisation de l'invention

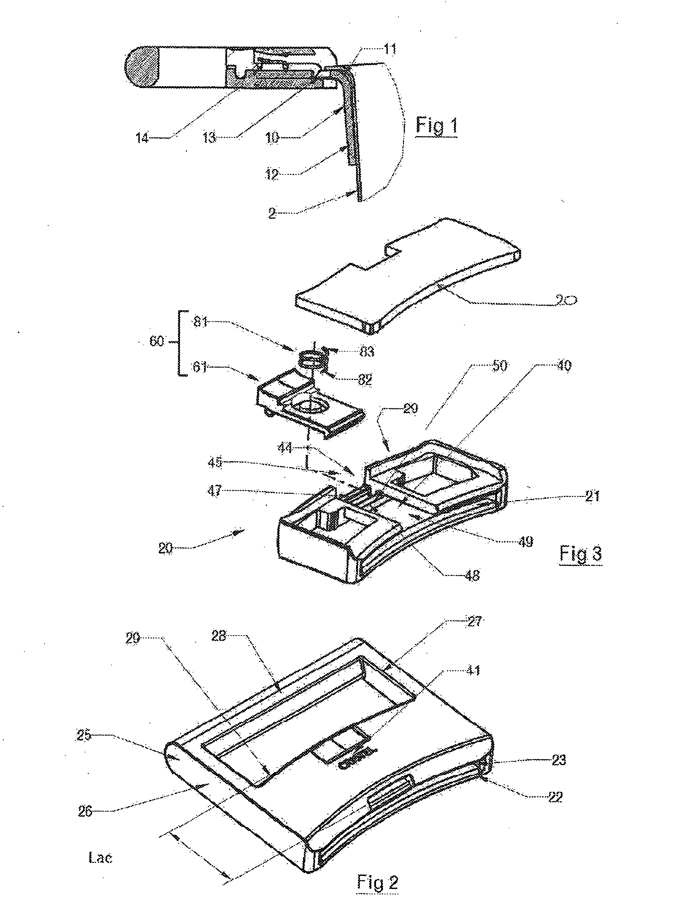

La figure 1 montre une oreille 10 d'un ustensile de cuisson dont seule une partie périphérique d'une paroi latérale verticale 2 est représentée. L'ustensile de cuisson est par exemple un ustensile creux tel qu'une casserole, et peut comprendre une oreille, ou deux oreilles semblables diamétralement opposées. L'oreille 10 peut être réalisée en métal ou en tout autre matériau approprié, par exemple un plastique ; l'oreille a une forme sensiblement plane et s'étend sensiblement à l'horizontal vers l'extérieur de l'ustensile. L'oreille 10 comprend un bord interne 11 prolongé par une patte de fixation 12 fixée sur la paroi latérale 2 de l'ustensile, par exemple par soudure, par rivetage, par collage, etc. L'oreille 10 comprend une lumière 13 sensiblement parallèle au bord interne 11.

Le dispositif (ou anse) de préhension selon l'invention comprend une coque 20 comprenant une cavité interne 21 qui débouche latéralement sur une face avant 22 de la coque 20 par un orifice oblong 23. La cavité interne 21 est similaire à la cavité interne du dispositif de préhension objet du brevet FR 2 813 516. Les dimensions de la cavité interne 21 sont telles que lorsqu'on introduit l'oreille 10 par l'orifice oblong 23, l'oreille loge sans jeu notable dans la cavité interne 21, et sur sa plus grande étendue afin de protéger efficacement les mains d'un utilisateur lorsque l'ustensile de cuisson est chaud. Dans cette position normale d'utilisation, la lumière 13 loge également, presque en totalité, dans la cavité interne 21.

Selon l'invention, la coque 20 est monobloc, comme cela est clairement visible sur la figure 2. Sur la figure 3, une partie de la paroi supérieure de la coque 20 a été découpée et l'anse a été représentée en une vue éclatée pour mettre en évidence les différents éléments de l'anse et les éléments internes de la coque, comme on le verra mieux par la suite.

La coque 20 peut être réalisée dans un matériau isolant thermiquement, ou dans un matériau faiblement conducteur de la chaleur. On notera toutefois qu'une anse de préhension selon l'invention n'est pas destinée à rester positionnée sur une oreille d'ustensile pendant une phase de chauffage d'ustensile, mais est plutôt destinée à être installée sur l'oreille d'un ustensile uniquement pendant une phase de manipulation dudit ustensile puis à être retirée. Dans ces conditions, un matériau conducteur thermique peut également être utilisé pour la réalisation de la coque de l'anse.

En fonction du matériau choisi, différents procédés de fabrication peuvent être envisagés pour réaliser la coque monobloc, par exemple un procédé de moulage de métal liquide, un procédé d'injection plastique, etc., la difficulté étant naturellement de réaliser les cavités et évidemment à l'intérieur de la coque.

L'anse comprend également un moyen de verrouillage 60 logé à l'intérieur d'une chambre de débattement 40 ménagée dans la coque 20.Le moyen de verrouillage est adapté pour coopérer avec la lumière 13 de l'oreille 10 lorsque la dite oreille 10 loge dans la cavité interne 21. La chambre de débattement est au moins partiellement fermée sur le dessus pour limiter les possibilités d'un accès non souhaité au moyen de verrouillage lorsque l'anse est verrouillée sur l'oreille d'un ustensile et est utilisée pour porter le dit ustensile.

Le moyen de verrouillage 60 comprend une plaque 61 montée pivotante à l'intérieur de la chambre de débattement 40 entre une position de verrouillage et une position déverrouillée. Dans l'exemple représenté, le moyen de verrouillage comprend également un moyen de rappel élastique tendant à amener ou a maintenir la plaque en position de verrouillage.

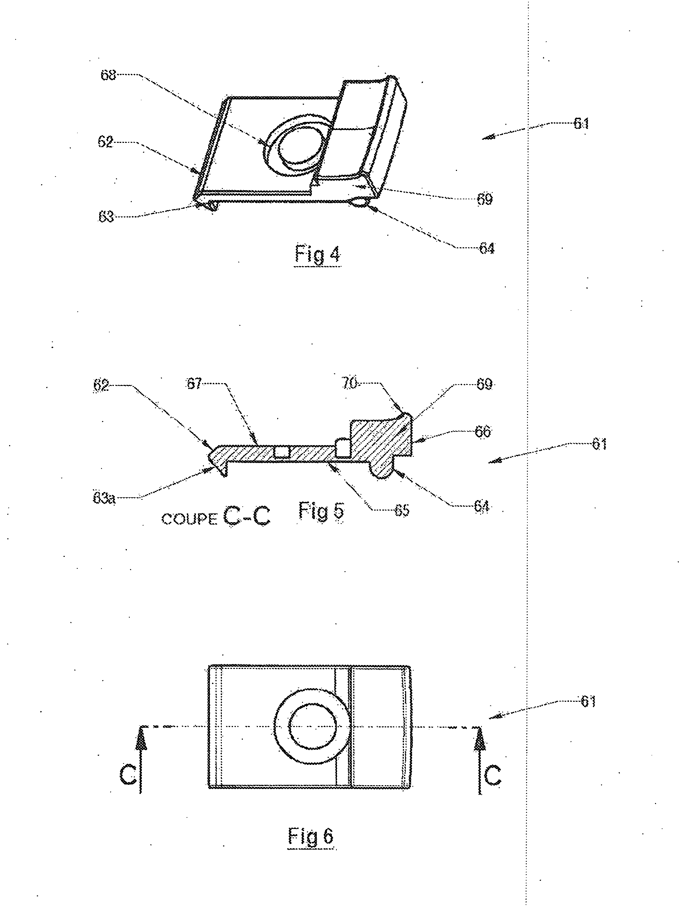

La plaque 61 est représentée seule sur les figures 4 à 6. Elle comprend à une extrémité avant 62 terminée par un bec 63, et un axe de pivotement 64. Les moyens de maintien de l'axe dans la coque sont décrits plus loin. Le bec 63 est adapté pour loger dans la lumière 13 de l'oreille 10 en position verrouillée du moyen de verrouillage et lorsque l'oreille loge dans la cavité interne 21. Dans l'exemple représenté, le bec 63 est recourbé vers le bas et présente sur sa face avant un chanfrein 63a formant une rampe de guidage permettant de soulever la plaque 61 par une poussée horizontale sur l'anse en direction de l'ustensile de cuisson.

L'axe de pivotement 64 est solidaire de la plaque 61 et il est positionné sur une face de dessous 65 de la plaque 61 et à proximité d'une extrémité arrière 66 de la plaque 61. Ainsi, une zone de débattement de la plaque n'est pas nécessaire à l'arrière de l'anse. L'axe de pivotement 64 s'étend sensiblement parallèle à l'orifice oblong 23 et la longueur de l'axe de pivotement est inférieure ou égale à une largeur de la plaque 61. L'axe de pivotement ne dépasse pas de part et d'autre de la plaque ; ainsi, l'insertion du moyen de verrouillage à l'intérieur de la coque est facilitée et il n'est pas nécessaire de maintenir les extrémités de l'axe à l'intérieur de la coque. La chambre de débattement étant fermée au moins partiellement sur le dessus, elle est adaptée pour permettre une insertion de la plaque dans la chambre de débattement selon une direction sensiblement horizontale.

Dans l'exemple représenté, le moyen de rappel élastique est un ressort 81 et la plaque 61 comprend sur une face de dessus 67, entre l'extrémité avant 62 de la plaque 61 et l'axe de pivotement 64 de la plaque, une rainure 68 de maintien latéral du ressort dont une première extrémité 82 est immobilisée dans la rainure 68 de la plaque 61 ; une deuxième extrémité 83 est en appui sur une face inférieure d'une paroi supérieure 41 de la chambre de débattement 40. Selon une variante, la face inférieure de la paroi supérieure 41 de la chambre de débattement 40 comprend une rainure de maintien latéral du ressort dont la deuxième extrémité 83 est maintenue dans la rainure de la paroi supérieure 41 de la chambre de débattement 40, la première extrémité 82 du ressort étant simplement en appui sur la face de dessus 67 de la plaque 61, entre l'extrémité avant de la plaque 61 et l'axe de pivotement 64 de la plaque 61. L'expérience montre que maintenir latéralement une seule extrémité du ressort est suffisant, du fait de la faible hauteur du ressort.

Selon une variante encore, deux rainures sont prévues, une sur la face supérieure de la plaque, une sur la face inférieure de la paroi supérieure 41 et une sur la face supérieure de la plaque 61. Ainsi, les deux extrémités du ressort sont maintenues latéralement par une rainure, de sorte que le ressort ne peut pas se déplacer latéralement.

Selon une variante encore, le ressort travaille en extension et est positionné sous la plaque, entre la face de dessous 65 de la plaque 61 et une face de dessus de la paroi inférieure de la coque 20, au moins une rainure étant prévue, sur la face de dessous 65 de la plaque 61 et / ou sur la face de dessus de la paroi inférieure de la coque 20 pour maintenir latéralement au moins une extrémité du ressort.

La chambre de débattement 40 débouche à l'arrière de l'anse latéralement sur une partie supérieure d'une paroi arrière de la chambre de débattement 40 par un orifice d'insertion 45 permettant l'insertion du moyen de verrouillage 60 dans la chambre de débattement 40. L'insertion du moyen de verrouillage dans la chambre de débattement se fait ainsi par l'arrière de l'anse, selon une direction sensiblement horizontale. La chambre de débattement étant fermée sur le dessus, le moyen de verrouillage est peu accessible.

Dans l'exemple représenté, l'orifice d'insertion 45 s'étend sur la partie supérieure de la paroi arrière de la chambre de débattement 40 et sur une partie arrière de la paroi supérieure 41 de la chambre de débattement 40. L'orifice d'insertion est ainsi particulièrement large, ce qui facilite l'insertion du moyen de verrouillage à l'intérieur de la chambre de débattement. De plus, une telle réalisation de l'orifice d'insertion permet de limiter la longueur de la plaque de verrouillage car la surépaisseur 69 et surtout le rebord d'appui 70 (voir plus loin) sont rendus accessibles au niveau de la paroi supérieure de la coque ; la face arrière de la surépaisseur 69 peut ainsi être rendue affleurante à la face arrière de la coque 20. Limiter la longueur de la plaque de verrouillage permet aussi de limiter la largeur Lac de la coque 20. Ainsi, dans l'exemple représenté, la largeur Lac de la coque est limitée à la distance entre la lumière et le bord externe de l'oreille 10 plus l'épaisseur des deux nervures 47, 48 plus le diamètre de l'axe de pivotement 64. Ainsi, dans l'exemple représenté, la coque de l'anse est à peine plus large et à peine plus longue que l'oreille de l'ustensile de cuisson.

Dans une variante (non représentée), l'orifice d'insertion s'étend uniquement sur la partie supérieure de la paroi arrière de la chambre de débattement 40. Dans ce cas, la plaque est réalisée un peu plus longue que dans l'exemple représenté, de sorte à rendre accessible à l'arrière de l'anse le rebord 70, et éventuellement tout ou partie de la surépaisseur 69 pour la manipulation du moyen de verrouillage.

Dans l'exemple représenté, la plaque 61 présente, à son extrémité arrière 66, une surépaisseur 69. Une fois la plaque 61 insérée dans la chambre de débattement, la surépaisseur ferme l'orifice d'insertion 45. Une pression manuelle sur une face de dessus de la surépaisseur 69 ne permet pas de faire pivoter facilement la plaque 61 jusqu'à la position déverrouillée, car la dite face de dessus est positionnée juste au dessus de l'axe de pivotement 64.

La surépaisseur 69 de la plaque est prolongée par un rebord 70 d'appui. En appuyant sur le rebord 70 plutôt que directement sur la face supérieure de la surépaisseur 69 pour déverrouiller l'anse, l'effort fourni s'applique non pas selon une direction verticale, à très faible distance de l'axe de pivotement 64, mais selon une direction oblique, plus éloignée de l'axe de pivotement. Ainsi, l'effort à fournir pour libérer l'oreille de l'anse est diminué. De préférence, le rebord 70 affleure sur la paroi supérieure de la coque 20 (figures 1, 2), et ne dépasse au dessus de la paroi supérieure de la coque 20. Le risque d'un appui accidentel sur le rebord 70 est ainsi supprimé, ce qui supprime le risque de déverrouillage accidentel de l'anse.

Les moyens de maintien de l'axe de pivotement sont décrits ci-dessous.

Dans l'exemple représenté, une partie inférieure de la paroi arrière de la chambre de débattement, en dessous de l'orifice d'insertion 45, forme une première nervure 47. La coque comprend par ailleurs une deuxième nervure 48 s'étendant depuis une paroi inférieure 49 de la chambre de débattement. La première nervure et la deuxième nervure s'étendent selon une direction sensiblement parallèle à l'orifice oblong 23, à une distance l'une de l'autre sensiblement égale au diamètre de l'axe de pivotement de la plaque. Les deux nervures forment ensemble une gorge de maintien de l'axe de pivotement 64 de la plaque 61 dans le plan horizontal. L'axe est également maintenu dans la gorge, selon un axe vertical, par le moyen de rappel élastique du moyen de verrouillage de sorte que, une fois mis en place à l'intérieur de la gorge, l'axe de pivotement ne peut pas sortir de la gorge et le moyen de verrouillage ne peut pas sortir de la chambre de débattement sans l'intervention d'une personne avisée.

Lorsque l'oreille d'un ustensile est insérée dans la cavité 21 de l'anse, un bord externe de l'oreille vient en appui contre la deuxième nervure, qui délimite ainsi localement la cavité interne 21.

Une distance entre une face supérieure 50 de la deuxième nervure et la paroi supérieure 41 de la chambre de débattement est choisie sensiblement égale à une épaisseur de la plaque plus une épaisseur de l'axe de pivotement de la plaque du moyen de verrouillage. Cette distance est ainsi choisie la plus faible possible, tout en tant suffisante pour insérer le moyen de verrouillage à l'intérieur de la chambre de débattement, l'épaisseur de l'anse est ainsi rendue la plus faible possible.

Si toutefois la hauteur du ressort 81 en position comprimée est légèrement supérieure à la hauteur de la rainure 68 de maintien du ressort réalisée sur la face de dessus de la plaque 61, on pourra choisir une distance entre la face supérieure 50 de la deuxième nervure et la paroi supérieure 41 de la chambre de débattement sensiblement égale à l'épaisseur de la plaque 61 plus l'épaisseur de l'axe de pivotement 64 plus la hauteur du ressort 81 moins la hauteur de la rainure 68.

Telle que représentée sur la figure 3, la coque 20 de l'anse est suffisamment grande pour être saisie à la main pour manipuler aisément un ustensile de cuisson sur lequel l'anse est verrouillée.

Dans l'exemple représenté sur la figure 2, la coque comprend également une partie de préhension 25, sensiblement en forme de U dont les extrémités des deux branches 26, 27 s'étendent depuis une face arrière 29 de la coque 20 (qui est également la face externe de la paroi de la chambre de débattement), un fond 28 du U formant une zone de préhension du dispositif de préhension. Le fond du U, représenté en forme de barreau d'un diamètre sensiblement égal à l'épaisseur de la coque, peut dans certaines situations faciliter la manipulation de l'anse. Des parties de préhension de formes différentes peuvent naturellement être envisagées pour faciliter encore la manipulation d'un ustensile ou pour des raisons d'ordre esthétique, par exemple des parties avec des formes plus arrondies, ou bien des parties planes dans le prolongement de la coque 20 telle que représentées, de manière similaire à l'anse objet du brevet FR 2 813 516, sans sortir du cadre de l'invention.

**Nomenclature**

| | | | |
|---|---|---|---|
| 2 | paroi verticale de l'ustensile | 47 | première nervie |
| 10 | oreille | 48 | deuxième nervure |
| 11 | bord interne de l'oreille | 49 | paroi inférieure de la chambre 40 |
| 12 | patte de fixation de l'oreille | | |
| 13 | lumière de l'oreille | 50 | face supérieure de la deuxième nervure partie arrière de la paroi supérieure 41 |
| 14 | bord externe de l'oreille | | |
| 20 | coque du dispositif amovible | | |
| 21 | cavité interne de la coque | | |
| 22 | face avant de la coque | 60 | moyen de déverrouillage |
| 23 | orifice oblong | 61 | plaque pivotante |
| 25 | partie de préhension en U de la coque, | 62 | extrémité avant de la plaque 61 |
| 26, 27 | branches du U | 63 | bec de la plaque 61 |
| 28 | fond du U | 64 | axe de pivotement de la plaque 61 |
| 29 | face arrière de la coque | | |
| 40 | chambre de débattement | 65 | face de dessous de la |
| 41 | paroi supérieure chambre de débattement rainure (non visible sur les figures) sur la paroi supérieure de la chambre de débattement | | plaque 61 |
| | | 66 | extrémité arrière de la plaque 61 |
| | | 67 | face de dessus de la plaque |
| | | 68 | rainure de la plaque |
| | | 69 | surépaisseur |
| | | 70 | rebord de la surépaisseur |
| | | 81 | ressort |
| | | 82 | première extrémité du ressort |
| 45 | orifice d'insertion de la | | |
| | chambre de débattement partie inférieure de la paroi arrière | 83 | deuxième extrémité du ressort |

## Revendications

1. Dispositif de préhension amovible pour manipuler des ustensiles de cuisson ayant au moins une oreille (10) de préhension dans laquelle est ménagée une lumière (13) sensiblement parallèle à un bord interne (11) de la dite oreille (10), le dispositif comportant une coque (20) comprenant une cavité interne (21) qui débouche latéralement sur une face avant (22) de la coque (20) par un orifice oblong (23), la dite cavité interne (21) étant adaptée pour loger l'oreille (10) lorsque l'oreille est introduite par l'orifice oblong (23), le dispositif de préhension comprenant également un moyen de verrouillage (60) logé à l'intérieur d'une chambre de débattement (40) ménagée dans la coque (20) et au moins partiellement fermée sur le dessus, le moyen de verrouillage (60) comprenant une plaque (61) montée pivotante à l'intérieur de la chambre de débattement entre une position verrouillée et une position déverrouillée, la dite plaque comprenant à une extrémité avant (62) un bec (63) adapté pour loger dans la lumière (13) de l'oreille (10) en position verrouillée du moyen de verrouillage et lorsque l'oreille loge dans la cavité interne (21), la dite plaque (61) comprenant également un axe de pivotement (64) positionné sur une face de dessous (65) de la plaque, le dit axe de pivotement (64) s'étendant sensiblement parallèle à l'orifice oblong (23), le dispositif de préhension étant **caractérisé en ce que** la coque (20) est monobloc et **en ce que** une longueur de l'axe de pivotement est inférieure ou égale à une largeur de la plaque (61) pour permettre l'insertion de la plaque dans la chambre de débattement par un orifice d'insertion (45) situé sur une partie arrière de la chambre de débattement selon une direction sensiblement horizontale.

2. Dispositif selon la revendication 1, dans lequel l'axe de pivotement est positionné à proximité d'une extrémité arrière (66) de la plaque (61).

3. Dispositif selon la revendication 2, dans lequel le moyen de verrouillage (60) comprend également un moyen de rappel élastique tendant à amener ou à maintenir la plaque en position de verrouillage.

4. Dispositif selon la revendication 3, dans lequel le moyen de rappel élastique est un ressort (81) et dans lequel :
• la plaque (61) comprend sur une face de dessus (67), entre l'extrémité avant (62) de la plaque (61) et l'axe de pivotement (64) de la plaque, une rainure (68) de maintien latéral du ressort dont une première extrémité (82) est immobilisée dans la rainure (68) de la plaque (61) et dont une deuxième extrémité (83) est en appui sur une paroi supérieure (41) de la chambre de débattement (40), et / ou
• la paroi supérieure (41) de la chambre de débattement (40) comprend une rainure (42) de maintien latéral du ressort dont la deuxième extrémité (83) est maintenue dans la rainure (42) de la paroi supérieure (41) de la chambre de débattement (40) et dont la première extrémité (82) est en appui sur la face de dessus (67) de la plaque (61), entre l'extrémité avant de la plaque (61) et l'axe de pivotement (64) de la plaque (61).

5. Dispositif selon l'une des revendications 2 à 4, dans lequel la plaque (61) présente, à l'extrémité arrière (66) de la plaque (61), une surépaisseur (69).

6. Dispositif selon la revendication 5, dans lequel la surépaisseur (69) de la plaque est prolongée par un rebord (70) d'appui.

7. Dispositif selon l'une des revendications précédentes, dans lequel la chambre de débattement (40) débouche latéralement sur une partie supérieure d'une paroi arrière (43) de la chambre de débattement (40) par l'orifice d'insertion (45) permettant l'insertion du moyen de verrouillage (60) dans la chambre de débattement (40).

8. Dispositif selon la revendication 7, dans lequel l'orifice d'insertion (45) s'étend sur la partie supérieure de la paroi arrière de la chambre de débattement (40) et sur une partie arrière de la paroi supérieure (41) de la chambre de débattement (40).

9. Dispositif selon l'une des revendications 7 à 8 en combinaison avec la revendication 2, dans lequel une partie inférieure de la paroi arrière de la chambre de débattement, en dessous de l'orifice d'insertion (45), forme une première nervure (47), dans lequel la coque comprend également une deuxième nervure (48) s'étendant depuis une paroi inférieure (49) de la chambre de débattement, la première nervure et la deuxième nervure s'étendant selon une direction sensiblement parallèle à l'orifice oblong, à une distance l'une de l'autre sensiblement égale à un diamètre de l'axe de pivotement de la plaque, les deux nervures formant ensemble une gorge de maintien de l'axe de pivotement de la plaque.

10. Dispositif selon la revendication 9, dans lequel une distance entre une face supérieure (50) de la deuxième nervure (48) et la paroi supérieure (41) de la chambre de débattement est sensiblement égale à une épaisseur de la plaque plus une épaisseur de l'axe de pivotement de la plaque du moyen de verrouillage.

11. Dispositif selon l'une des revendications précédentes, dans lequel la coque comprend une partie de préhension (25), sensiblement en forme de U dont les extrémités des deux branches (26, 27) s'étendent depuis une face arrière (29) de la coque (20), un fond (28) du U formant une zone de préhension du dispositif de préhension.

## Patentansprüche

1. Abnehmbare Greifvorrichtung für die Handhabung von Kochutensilien mit wenigstens einer Greiflasche (10), in der eine zu einem internen Rand (11) der genannten Lasche (10) deutlich parallele Öffnung (13) ausgespart ist, wobei die Vorrichtung eine Schale (20) umfasst, die eine interne Aushöhlung (21) umfasst, die lateral auf eine vordere Seite (22) der Schale (20) durch eine längliche Ausnehmung (23) mündet, wobei die genannte interne Aushöhlung (21) angepasst ist, um die Lasche (10) aufzunehmen, wenn die Lasche durch die längliche Ausnehmung (23) eingeführt wird, wobei die Greifvorrichtung ebenfalls ein Verriegelungsmittel (60) umfasst, das im Innern einer Schwenkkammer (40) untergebracht ist, die in der Schale (20) ausgespart ist und wenigstens teilweise auf der Oberseite geschlossen ist, wobei das Verriegelungsmittel (60) eine Platte (61) umfasst, die schwenkbar im Innern der Schwenkkammer zwischen einer verriegelten Position und einer entriegelten Position montiert ist, wobei die genannte Platte an einem vorderen Ende (62) einen Schnabel (63) umfasst, der geeignet ist, um in der Öffnung (13) der Lasche (10) in verriegelter Position des Verriegelungsmittels untergebracht zu werden, wenn die Lasche in der internen Aushöhlung (21) untergebracht ist, wobei die genannte Platte (61) ebenfalls eine Schwenkachse (64) umfasst, die auf einer unteren Seite (65) der Platte positioniert ist, wobei sich die genannte Schwenkachse (64) deutlich parallel zur länglichen Ausnehmung (23) erstreckt, wobei die Greifvorrichtung **dadurch gekennzeichnet ist, dass** die Schale (20) aus einem Stück besteht und dass die Länge der Schwenkachse kleiner als oder gleich einer Breite der Platte (61) ist, um gemäß einer deutlich horizontalen Richtung das Einfügen der Platte in die Schwenkkammer durch eine Einfuhröffnung (45) zu erlauben, die sich auf einem hinteren Teil der Schwenkkammer befindet.

2. Vorrichtung gemäß Anspruch 1, bei der die Schwenkachse in der Nähe eines hinteren Endes (66) der Platte (61) positioniert ist.

3. Vorrichtung gemäß Anspruch 2, bei der das Verriegelungsmittel (60) ebenfalls ein elastisches Rückholmittel umfasst, das dazu tendiert, die Platte in die Verriegelungsposition zu bringen oder dort zu halten.

4. Vorrichtung gemäß Anspruch 3, bei der das elastische Rückholmittel eine Feder (81) ist und bei der:
• die Platte (61) auf einer oberen Seite (67) zwischen dem vorderen Ende (62) der Platte (61) und der Schwenkachse (64) der Platte eine laterale Halterinne (68) der Feder umfasst, deren eines erstes Ende (82) in der Rinne (82) der Platte (61) festgestellt ist und deren eines zweites Ende (83) auf einer oberen Wand (41) der Schwenkkammer (40) zum Aufstützen kommt, und / oder
• die obere Wand (41) der Schwenkkammer (40) eine laterale Festhalterrinne (42) der Feder umfasst, deren zweites Ende (83) in der Rinne (42) der oberen Wand (41) der Schwenkkammer (40) festgehalten wird und deren erstes Ende (82) auf der oberen Seite (67) der Platte (61) zwischen dem vorderen Ende der Platte (61) und der Schwenkachse (64) der Platte (61) zum Aufstützen kommt.

5. Vorrichtung gemäß einem der Ansprüche 2 bis 4, bei der die Platte (61) am hinteren Ende (66) der Platte (61) eine Überdicke (69) aufweist.

6. Vorrichtung gemäß Anspruch 5, bei der die Überdicke (69) der Platte durch einen Stützrand (70) verlängert wird.

7. Vorrichtung gemäß einem der voranstehenden Ansprüche, bei der die Schwenkkammer (40) lateral auf einen oberen Teil einer hinteren Wand (43) der Schwenkkammer (40) durch die Einführöffnung (45) einmündet, die das Einführen des Verriegelungsmittels (60) in die Schwenkkammer (40) zulässt.

8. Vorrichtung gemäß Anspruch 7, bei der sich die Einführöffnung (45) über den oberen Teil der hinteren Wand der Schwenkkammer (40) und über einen hinteren Teil der oberen Wand (41) der Schwenkkammer (40) erstreckt.

9. Vorrichtung gemäß einem der Ansprüche 7 bis 8 in Verbindung mit Anspruch 2, bei der ein unterer Teil der hinteren Wand der Schwenkkammer unterhalb der Einführöffnung (45) eine erste Rippung (47) bildet, in der die Schale ebenfalls eine zweite Rippung (48) umfasst, die sich von einer unteren Wand (49) der Schwenkkammer erstreckt, wobei sich die erste Rippung und die zweite Rippung gemäß einer zur länglichen Ausnehmung deutlich parallelen Richtung in einer Entfernung voneinander erstrecken, die deutlich gleich einem Durchmesser der Schwenkachse der Platte ist, wobei die zwei Rippungen zusammen eine Festhalteauskehlung der Schwenkachse der Platte bilden.

10. Vorrichtung gemäß Anspruch 9, bei der eine Entfernung zwischen einer oberen Seite (50) der zweiten Rippung (48) und der oberen Wand (41) der Schwenkkammer deutlich gleich einer Dicke der Platte plus einer Dicke der Schwenkachse der Platte des Verriegelungsmittels ist.

11. Vorrichtung gemäß einem der voranstehenden Ansprüche, bei der die Schale einen Greifteil (25) umfasst, der eine deutliche U-Form aufweist, deren Enden der zwei Zweige (26, 27) sich von einer hinteren Seite (29) der Schale (20) erstrecken, wobei ein Boden (28) des Us einen Greifbereich der Greifvorrichtung bildet.

## Claims

1. Removable holding device for manipulating cooking utensils having at least one holding lug (10) in which is provided an opening (13) substantially parallel to an internal edge of said lug (10), the device including a shell (20) comprising an internal cavity (21) that opens laterally onto a front face (22) of the shell (20) via an oblong orifice (23), said internal cavity (21) being adapted to receive the lug (10) when the lug is inserted via the oblong orifice (23), the holding device also comprising locking means (60) received inside a clearance chamber (40) provided in the shell (20) and at least partially closed at the top, the locking means (60) comprising a plate (61) mounted to pivot inside the clearance chamber between a locked position and an unlocked position, said plate comprising at a front edge (62) a nose (63) adapted to be received in the opening (13) in the lug (10) in the locked position of the locking means and when the lug is received in the internal cavity (21), said plate (61) also comprising a pivot (64) positioned on a bottom face (65) of the plate, said pivot (64) extending substantially parallel to the oblong orifice (23), the holding device being **characterized in that** the shell (20) is in one piece and **in that** a length of the pivot is less than or equal to a width of the plate (61) to allow insertion of the plate in the clearance chamber through an insertion orifice (45) located on a rear part of the clearance chamber in a substantially horizontal direction.

2. Device according to claim 1, wherein the pivot is positioned in the vicinity of a rear edge (66) of the plate (61).

3. Device according to claim 2, wherein the locking means (60) also comprise elastic return means adapted to move the plate into the locked position or to retain it there.

4. Device according to claim 3, wherein the elastic return means is a spring and wherein:
. the plate (61) comprises on an upper face (67), between the front edge (62) of the plate (61) and the pivot (64) of the plate, a groove (68) for lateral retention of the spring a first end (82) of which is immobilized in the groove (68) of the plate (61) and a second end (83) of which bears on an upper wall (41) of the clearance chamber (40), and/or
. the upper wall (41) of the clearance chamber (40) comprises a groove (42) for lateral retention of the spring the second end (83) of which is retained in the groove (42) of the upper wall (41) of the clearance chamber (40) and the first end (82) of which bears on the upper face (67) of the plate (61) between the front edge of the plate (61) and the pivot (64) of the plate (61).

5. Device according to any one of claims 2 to 4, wherein the plate (61) has, at the rear edge (66) of the plate (61), an increased thickness portion (69).

6. Device according to claim 5, wherein the increased thickness portion (69) of the plate is extended by a bearing flange (70).

7. Device according to one of the preceding claims, wherein the clearance chamber (40) opens laterally onto an upper part of a rear wall (43) of the clearance chamber (40) through the insertion orifice (45) enabling insertion of the locking means (60) in the clearance chamber (40).

8. Device according to claim 7, wherein the insertion orifice (45) extends over the upper part of the rear wall of the clearance chamber (40) and over a rear part of the upper wall (41) of the clearance chamber (40).

9. Device according to one of claims 7 to 8 in combination with claim 2, wherein a lower part of the rear wall of the clearance chamber, below the insertion orifice (45), forms a first rib (47), wherein the shell also comprises a second rib (48) extending from a lower wall (49) of the clearance chamber, the first and second ribs extending in a direction substantially parallel to the oblong orifice, at a distance from each other substantially equal to a diameter of the pivot of the plate, the two ribs together forming a groove for retaining the pivot of the plate.

10. Device according to claim 9, wherein a distance between an upper face (50) of the second rib (48) and the upper wall (41) of the clearance chamber is substantially equal to a thickness of the plate plus a thickness of the pivot of the plate of the locking means.

11. Device according to any one of the preceding claims, wherein the shell comprises a holding part (25) that is substantially U-shaped and the ends of the two branches (26, 27) thereof extend from a rear face (29) of the shell (20), a bottom (28) of the U-shape forming a holding area of the holding device.
